# EUROPEAN PATENT APPLICATION

(11) **EP 4 538 730 A1**
(43) Date of publication of application: **16.04.2025**
(21) Application number: 24205477.3
(22) Date of filing: 09.10.2024
(51) Int. Cl.: G01S 3/02, G01S 3/04, G01S 3/28

(54) **RECONFIGURABLE OFFSET ANGLE-ERROR MEASUREMENT AND TRACKING TECHNIQUE**

(30) Priority: 12.10.2023 US 202318379272
(71) Applicant: ThinKom Solutions, Inc., Hawthorne, CA 90250 (US)
(72) Inventor: MILROY, William W., Torrance 90505 (US)
(74) Representative: Kraus & Lederer PartGmbB

(57) **Abstract**

A device and method are provided for tracking a signal in a satellite-on-the-move application using an antenna that exhibits beam walk over frequency. An antenna that exhibits beam walk over frequency is used to receive, from a remote device, a first signal at a first frequency with a first beam direction, and the antenna that exhibits beam walk over frequency is used to communicate with the remote device a second signal at a second frequency, the second frequency offset from the first frequency and with a second beam direction offset in angle from the first beam direction. A periodic physical scan of the antenna about a current pointing direction of the antenna is performed over a prescribed time period, a strength of the received first signal over the prescribed time period is compared to a predetermined signal profile. A pointing direction of the antenna is adjusted based on the comparison, whereby adjusting causes the first signal to converge to the predetermined signal profile resulting in a strength of the second signal to peak.

## Description

### TECHNICAL FIELD

The present invention relates generally to antennas, and more particularly, to a device and method for pointing an antenna used in on-the-move communication applications.

### BACKGROUND ART

Satellite-on-the-move (SOTM) communications pertain to technologies that enable communication between a satellite and a moving platform, such as vehicles, ships, aircraft, etc. An SOTM communication system typically includes a stabilized antenna mounted on a moving platform, the antenna tracking the satellite's position in the sky and compensating for the platform's motion, vibrations, and other disturbances. More particularly, satellite networks provide a beacon signal, and the SOTM system establishes a link with a geostationary satellite or a constellation of satellites via sophisticated tracking algorithms that lock onto the beacon's signal to compensate for the platform's movement, ensuring that the antenna's beam remains directed towards the satellite. The system constantly monitors signal quality and adjusts parameters such as transmit power, frequency, and modulation schemes to maintain a stable and optimal connection. The received data is processed and integrated with the platform's onboard systems, applications, or network infrastructure, which provides seamless connectivity that enables the transmitted data to be used for real-time data transmission, navigation, remote sensing, internet access, surveillance, video conferencing, voice communication or other specific purposes while the platform is in motion.

Overall, SOTM communication systems combine advanced tracking and pointing capabilities, robust communication protocols, and efficient signal management techniques to enable reliable and continuous communication between a moving platform and a satellite. Most antennas used in SOTM communications systems tend to exhibit little or no beam-walk of their mainbeam over their operating frequency band. To this end, parabolic dish antennas and array antennas utilizing true-time-delay feed networks can be used to provide reliable satellite pointing accuracy. Such antennas typically are the antennas of choice for SOTM communication systems due to the fact that these antennas exhibit stable (frequency-independent) mainbeam positions (pointing angles) over their operating frequency band. This means that as the selected link frequency is changed for a given mobile terminal, the antenna's main beam will remain pointed in the same direction no matter which frequency in the antenna's operating band has been chosen. Such behavior is important in satellite communications where adjacent satellites can be as close as 2 degrees from one another and some method of closed-loop received signal strength indication (RSSI) is being used to maintain (track) accurate pointing to the satellite.

RSSI ensures accurate antenna pointing and involves periodically or continuously measuring the strength of a beacon signal provided by the satellite-of-interest. In most applications of RSSI it is not uncommon for the communications terminal utilizing the antenna to be assigned a communications frequency located at one edge of the antenna's operating band while the beacon frequency transmitted by the satellite to the antenna for RSSI tracking purposes is located at a different or even at the opposite end of the antenna's operating band. Under such conditions, any antenna exhibiting beam-walk of its main beam over frequency would struggle to achieve the goal of effectively tracking the satellite while communicating with it. This is due to the fact that use of existing RSSI methods would immediately result in the main beam of the antenna pointing in the wrong direction in the selected communication band. Since satellite operators/owners are strongly resistant to approving any mobile satellite terminal that would risk interfering with their satellite networks or adjacent satellite networks, system designers who intend to use RSSI as one of the main methods to provide accurate antenna pointing have favored taking the conservative approach by restricting themselves to antenna types that exhibit stable main beam behavior over frequency (the beam behavior is well-behaved and stable).

Another way of maintaining reliable satellite pointing accuracy in SOTM communication systems is to use expensive onboard sensors, such as an inertial reference unit (IRU) or inertial navigation system (INS) mounted on or near the antenna system as a means to accurately point the antenna. The IRU or INS provide a means to accurately "open-loop" point the antenna in lieu of using RSSI. However, these devices tend to be quite expensive and require very accurate calibration upon installation of the antenna system.

Despite having such accurate devices at their disposal, antenna system designers generally select frequency-independent antennas as a way (the only way using conventional tracking techniques) to allow for closed-loop tracking methods. Such frequency-independent antennas are advantageous in that they eliminate the need for the added cost and complexity of open-loop pointed systems, including elimination of the need to rigorously characterize frequency-dependent beam positions over frequency and (in the case of phased-array antennas) scan angle. In some cases, however, this may unnecessarily limit the designer's options by ruling-out other antenna types that may have more-favorable properties such as low-loss (high efficiency), lightweight, low-cost, and smaller form-factor, to name a few.

### SUMMARY OF INVENTION

Conventionally, antenna subsystem designers have been restricted to using more costly methods, such as open-loop pointing using expensive sensors, or selecting from a smaller group of antenna types that did not exhibit beam walk over frequency to ensure the antenna system was accurately pointing/tracking the desired satellite. In most cases such methods result in expensive and/or non-optimal performing systems.

A device and method in accordance with the present invention enable phased-array antennas or other types of antennas exhibiting some degree of beam walk (frequency-dependent beam position) across their operating frequency band to be used for SOTM communication applications. More specifically, to optimize and maintain the link, a pointing and tracking method for antennas that exhibit beam walk in SOTM communication applications tracks a received carrier or beacon signal using the side of the receive antenna's mainbeam (in lieu of the received signal's peak). The inventive method exploits the fact that the mainbeam shape of a high-gain traveling-wave antenna aperture can be characterized accurately enough over its operating frequency band such that, in cases where the received tracking carrier or beacon received from a satellite or other signal source is shifted in frequency from the assigned communication carrier of the link due to the frequency-dependent nature of the antenna's mainbeam position, the frequency-offset tracking carrier or beacon signal can still be exploited for accurate off-boresite pointing of such antennas while simultaneously peaking the beam on the communication carrier

### (rather than peaking on the tracking or beacon carrier itself.)

The device and method in accordance with the invention enables exploitation of an entire class of antenna apertures that were previously excluded from being effectively used in SOTM communication applications when using highly accurate and reliable closed-loop RSSI techniques. Moreover, the device and method in accordance with the invention do not require the use of open-loop methods that require highly accurate and expensive inertial sensors along with rigorous (re)calibration.

According to one aspect of the invention, a method for tracking a signal in a satellite-on-the-move application using an antenna that exhibits beam walk over frequency includes: using the antenna that exhibits beam walk over frequency to receive, from a remote device, a first signal at a first frequency with a first beam direction; using the antenna that exhibits beam walk over frequency to communicate with the remote device a second signal at a second frequency, the second frequency offset from the first frequency and with a second beam direction offset in angle from the first beam direction; performing over a prescribed time period a periodic physical scan of the antenna about a current pointing direction of the antenna; comparing a strength of the received first signal over the prescribed time period to a predetermined signal profile; and adjusting a pointing direction of the antenna based on the comparison, whereby said adjusting causes the first signal to converge to the predetermined signal profile resulting in a strength of the second signal to peak.

According to another aspect of the invention, a method for tracking a signal in a satellite-on-the-move application using an antenna that exhibits beam walk over frequency includes: using the antenna that exhibits beam walk over frequency to receive, from a remote device, a first signal at a first frequency with a first beam direction; using the antenna that exhibits beam walk over frequency to communicate with the remote device a second signal at a second frequency, the second frequency offset from the first frequency and with a second beam direction offset in angle from the first beam direction; and using a side of a main beam of the antenna to track the first signal so as to center the communication signal on a peak of the antenna's main beam.

In one embodiment, comparing includes generating the predetermined signal profile based on a known angular offset between the first beam direction at the first frequency and the second beam direction at the second frequency due to beam walk over frequency.

In one embodiment, adjusting the pointing direction of the antenna based on the comparison includes adjusting the pointing direction to center the second signal on a location of the remote device.

In one embodiment, comparing the strength of the received first signal to the predetermined signal profile includes using predefined contours arranged about a Z-axis of the antenna main beam.

In one embodiment, using predefined contours includes using a plurality of circular or elliptical contours that all intersect at a common point along the Z-axis as the predefined contours.

In one embodiment, a radius of each of the plurality of circular or elliptical contours corresponds to a predetermined power drop of the second signal.

In one embodiment, the predetermined power drop is less than 3dB.

In one embodiment, performing the periodic physical scan of the antenna includes performing at least one of a conical scan or a cruciform scan.

In one embodiment, a location of the second frequency in an operating band of the antenna is different from a location of the first frequency in the operating band of the antenna.

In one embodiment, a location of the second frequency in an operating band of the antenna is opposite from a location of the first frequency in the operating band of the antenna.

In one embodiment, the method includes using a variable inclination continuous transverse stub (VICTS) antenna as the antenna that exhibits beam walk over frequency.

According to another aspect of the invention, a controller for tracking a signal in a satellite-on-the-move application using an antenna that exhibits beam walk over frequency includes: logic configured to obtain, via the antenna that exhibits beam walk over frequency, a first signal from a remote device, the first signal at a first frequency and having a first beam direction; logic configured to communicate with the remote device via the antenna that exhibits beam walk over frequency a second signal at a second frequency, the second frequency offset from the first frequency and having a second beam direction offset in angle from the first beam direction; logic configured to perform over a prescribed time period a periodic physical scan of the antenna about a current pointing direction of the antenna; logic configured to compare a strength of the received first signal over the prescribed time period to a predetermined signal profile; and logic configured to adjust a pointing direction of the antenna based on the comparison, whereby said adjusting causes the first signal to converge to the predetermined signal profile resulting in a strength of the second signal to peak.

In one embodiment, the logic configured to perform the periodic physical scan of the antenna includes logic configured to implement the physical scan in the form of at least one of a conical scan or a cruciform scan.

In one embodiment, the logic configured to compare the strength of the received first signal over the prescribed time period to the predetermined signal profile includes logic configured to generate the predetermined signal profile based on a known angular offset between the first abeam direction at the first frequency and the second beam direction at the second frequency due to beam walk over frequency.

In one embodiment, the logic configured to adjust the pointing direction of the antenna based on the comparison includes logic configured to adjust the pointing direction to center the second signal on a location of the remote device.

In one embodiment, a location of the second frequency in an operating band of the antenna is different from a location of the first frequency in the operating band of the antenna.

In one embodiment, a location of the second frequency in an operating band of the antenna is opposite from a location of the first frequency in the operating band of the antenna.

In one embodiment, the logic configured to compare the strength of the received first signal over the prescribed time period to the predetermined signal profile includes logic configured to use predefined contours arranged about a Z-axis of the antenna main beam.

In one embodiment, the logic configured to use predefined contours arranged about the Z-axis of the antenna main beam includes logic configured to use a plurality of circular or elliptical contours that all intersect at a common point along the Z-axis as the predefined contours.

In one embodiment, a radius of each of the plurality of circular or elliptical contours corresponds to a predetermined power drop of the second signal.

In one embodiment, the predetermined power drop is less than 3dB.

According to another aspect of the invention, a system for use in satellite-on-the-move applications includes: a variable inclination continuous transverse stub (VICTS) antenna; and the controller as described herein.

To the accomplishment of the foregoing and related ends, the invention, then, comprises the features hereinafter fully described and particularly pointed out in the claims. The following description and the annexed drawings set forth in detail certain illustrative embodiments of the invention. These embodiments are indicative, however, of but a few of the various ways in which the principles of the invention may be employed. Other objects, advantages and novel features of the invention will become apparent from the following detailed description of the invention when considered in conjunction with the drawings.

### BRIEF DESCRIPTION OF DRAWINGS

In the annexed drawings, like references indicate like parts or features.
Fig. 1 illustrates an exemplary SOTM communication application in which a moving platform communicates with a satellite via an antenna.
Fig. 2 is a simple block diagram for controlling pointing of an antenna that exhibits beam walk over frequency in accordance with the invention.
Fig. 3A is a graphical representation of an antenna conical scan for an antenna that does not exhibit beam walk over frequency, where a first beam is at a frequency f=f1 and a second beam is at a frequency f=f2, the two beams being coincident and centered on the Z-axis of the target, with the Z-axis of the target representing a line from the center of the target satellite antenna and the center of the moving platform antenna.
Fig. 3B illustrates a signal level curve over time for the scenario illustrated in Fig. 3A.
Fig. 4A is a graphical representation of an antenna conical scan for an antenna that does not exhibit beam walk over frequency, where a first beam is at a frequency f=f1 and a second beam is at a frequency f=f2, the two beams being coincident and offset from a Z-axis of the target.
Fig. 4B illustrates a signal level curve over time for the scenario illustrated in Fig. 4A.
Fig. 5A is a graphical representation of an antenna conical scan for an antenna that exhibits beam walk over frequency, where a first beam is at a frequency f=f1 and centered on a Z-axis of the target, and a second beam is at a frequency f=f2 and offset from a Z-axis of the target.
Fig. 5B illustrates a signal level curve over time for the scenario illustrated in Fig. 5A.
Fig. 6A is a graphical representation of an antenna conical scan for an antenna that exhibits beam walk over frequency, where a first beam is at a frequency f=f1 and offset from a Z-axis of the target, and a second beam is at a frequency f=f2, offset from a Z-axis of the target and not coincident with the first beam.
Fig. 6B illustrates a signal level curve over time for the scenario illustrated in Fig. 6A.
Fig. 7 is a flow chart illustrating exemplary steps of a method for tracking a satellite in accordance with the invention.
Fig. 8 is a block diagram of an exemplary controller that can implement the method of Fig. 7.

### DETAILED DESCRIPTION OF INVENTION

Embodiments of the present invention will now be described with reference to the drawings, wherein like reference numerals are used to refer to like elements throughout. It will be understood that the figures are not necessarily to scale.

The word "about" when immediately preceding a numerical value means a range of plus or minus 10% of that value, e.g., "about 50" means 45 to 55, "about 25,000" means 22,500 to 27,500, etc., unless the context of the disclosure indicates otherwise, or is inconsistent with such an interpretation. For example, in a list of numerical values such as "about 49, about 50, about 55, "about 50" means a range extending to less than half the interval(s) between the preceding and subsequent values, e.g., more than 49.5 to less than 52.5. Furthermore, the phrases "less than about" a value or "greater than about" a value should be understood in view of the definition of the term "about" provided herein.

Many of the elements discussed in this specification, whether referred to as a "system", a "module", a "circuit" or the like, may be implemented in hardware circuit(s), a processor executing software code, or a combination of a hardware circuit and a processor executing code."

The present invention finds utility in phased-array antenna systems and therefore will be described chiefly in this context. However, aspects of the invention are also applicable to any class of traveling wave or phased-array (ESA) antenna used in SOTM communication applications for which the beam pointing position is frequency-dependent, including Variable Inclination Continuous Transverse Stub (VICTS) antenna arrays.

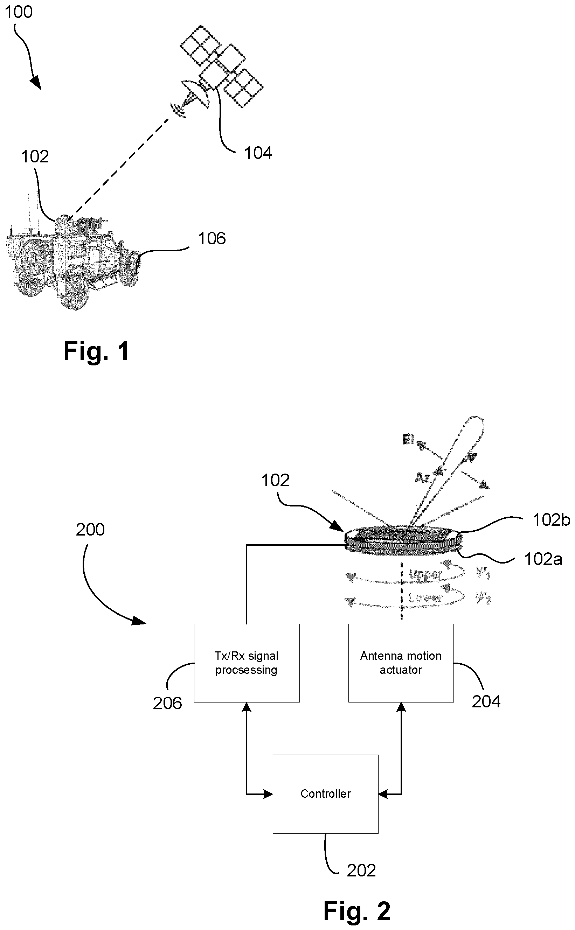

Referring initially to Fig. 1, illustrated is an exemplary SOTM application 100 in accordance with the invention that utilizes an antenna 102 exhibiting beam walk over frequency to track and communicate with the satellite 104. More specifically, a moving platform 106, which in the illustrated embodiment is a vehicle, communicates with a geostationary satellite 104 via an antenna 102 mounted on the moving platform 106. As the platform 106 moves relative to the earth (and thus relative to the satellite 104), a pointing direction of the antenna 102 is adjusted to account for a change in position or orientation of the moving platform 106 (and thus the antenna 102) relative to the geostationary satellite 104.

With additional reference to Fig. 2, illustrated is an SOTM system 200 for controlling the antenna 102 that exhibits beam walk over frequency so as to maintain proper pointing of the antenna 102 at the satellite 104 as the platform 106 moves. The system 200 includes a controller 202 communicatively coupled to an antenna motion actuator 204 and to signal processing circuitry 206. The antenna motion actuator 204 is operatively coupled to the antenna 102 to effect a pointing direction of the antenna 102.

For example, an antenna 102 embodied as a VICTS antenna array includes a first "lower" plate 102a disposed beneath a second "upper" plate 102b to define a parallel-plate region between the plates, each plate rotatable about a common axis. The first lower plate 102a includes one or more line sources emanating into a parallel-plate region formed and bounded between the plates 102a, 102b, while the second upper plate 102b includes a one-dimensional lattice of continuous radiating stubs, thereby introducing a known well-characterized frequency-dependent behavior to its beam pointing direction. Mechanical rotation of the upper plate relative to the lower plate serves to vary the inclination of incident parallel-plate modes, launched at the line source(s), relative to the continuous transverse stubs in the upper plate, and in doing so constructively excites a radiated planar phase-front whose angle relative to the mechanical normal of the array (theta) is a simple continuous function of the relative angle (w) of (differential) mechanical rotation between the two plates. Common rotation of the two plates in unison moves the phase-front in the orthogonal azimuth (phi) direction. The antenna motion actuator 204 may include a first actuator that effects rotation of the first plate 102a about the common axis and a second actuator that effects rotation of the second plate 102b about the common axis. Through independent or combined rotation of the plates 102a, 102b, a pointing direction of the antenna 102 can be changed.

Signals received by the antenna 102 as well as signals transmitted by the antenna 102 are processed through signal processing circuitry 206 as is conventional. The controller 202, is operative to command the antenna motion actuator 204 to adjust a pointing direction of the antenna 102 based on signals received by the antenna 102 and processed by the signal processing circuitry 206. More particularly, and as discussed in more detail below, the controller 202 tracks, by means of monitoring of the processed signal (206) of the received carrier or beacon , and employing, as a target, an apriori known offset position on the side of the receive antenna's mainbeam (in lieu of its peak) to adjust a pointing direction of the antenna.

A method of pointing an antenna in accordance with the invention utilizes regions of an antenna main beam that are offset from a peak of the main beam to achieve precision closed-loop RSSI-based pointing and tracking. Specifically, the primary signal (at frequency fo) is centered on the peak of the main beam, while a different frequency (f1) with a corresponding offset beam position, is employed for closed-loop tracking. Such method is particularly advantageous when using phased-array antennas where the satellite beacon frequency used to conduct RSSI is different from the assigned carrier signal frequency of the link. In contrast to conventional antenna systems that use the peak of the beam to support this closed-loop tracking function, the method in accordance with the invention employs an intentional angular offset from the peak. This intentional apriori known angular offset allows the center (peak) of the beam (at one particular frequency) to be pointed directly at the desired signal, while closed-loop tracking is implemented at a different angular position (and at a different signal frequency) offset in angle from the peak of the mainbeam.

RSSI tracking using an antenna exhibiting beam walk over frequency is made possible by the selection of a measured or calculated signal strength curve over the full 360° of RSSI conical scan that 1) matches the characterized beam shape of the antenna at the known beacon frequency of the satellite, and 2) takes into account the amount of beam walk that is known to occur as a result of the difference between the beacon frequency of the satellite and the selected carrier frequency of the communication signal. The measured signal strength curve is used to adjust the pointing of the antenna such that the antenna is optimally pointed to receive the main beam while tracking the carrier or beacon signal using the side of the antenna's main beam.

When implementing RSSI as a selected tracking method, control system designers typically use a conical or cruciform (step scan) scanning technique whereby the peak of the antenna beam is moved in elevation and azimuth in small amounts, typically fractions of an antenna beam width, with the strength of the received satellite signal measured at each of these points to determine if the antenna is pointed properly. When using a conventional antenna whose main beam is circular or elliptical in shape, the RSSI conical scan shape will typically trace a matching circular or elliptical path, with the last known location of the satellite representing the center of the circle or ellipse. Equal signal strength values measured at each of these points around the path would indicate that the antenna is properly pointed at the satellite. Similarly, in cases where an antenna's length and width dimensions are not equal, resulting in an elliptical main beam shape, an elliptical conical scan shape is typically chosen. In such instances, equal received signal strength values measured at the major and minor axes of the ellipse would indicate the antenna has been properly pointed.

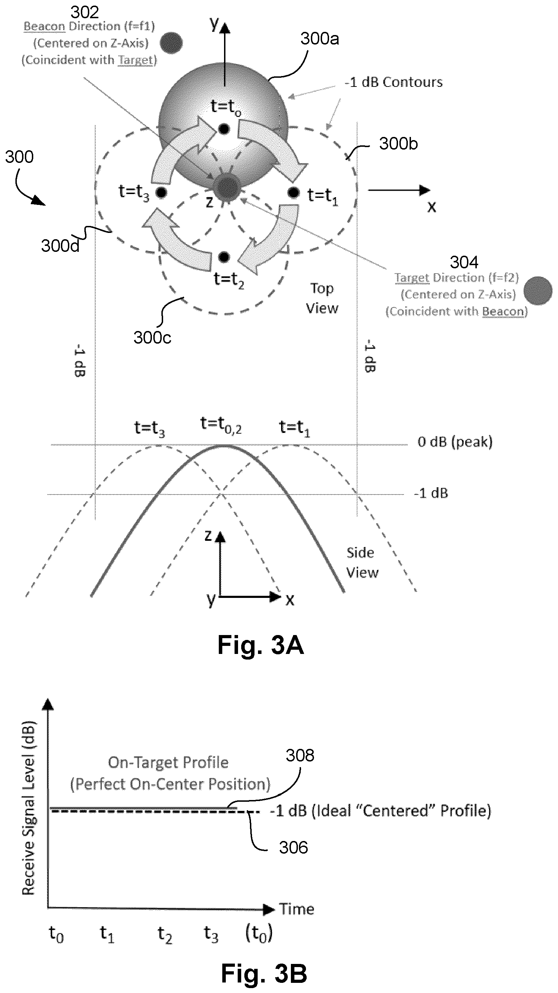

Referring to Figs. 3A and 3B, illustrated is a conical scan pattern of the main beam of the antenna (Fig. 3A) and a received signal level over time (Fig. 3B) for a conventional system. More particularly, Fig. 3A illustrates an example of a standard RSSI conical scan 300 of a conventional, non-traveling wave antenna (i.e., an antenna that does not exhibit beam walk over frequency) at two different frequencies in the antenna's operating band. In Fig. 3A four points along a conical scan 300a, 300b, 300c, 300d and beamwidth contours are illustrated, each directed in a different direction but whose geometric center represents the presumed location of the target satellite. While four points along the conical scan are shown, it will be appreciated this number of scan points is merely exemplary and a different number of scans points may be performed.

As can be seen in Fig. 3A, a direction of a beacon signal 302 at a first frequency (f=f1) is centered on the Z-axis of the satellite 104 and is at the centroid of the conical scan points 300a-300d. Similarly, a direction of a target signal 304 at a second frequency (f=f2) is also centered on the Z-axis of the satellite 104 and coincident with the direction of the beacon signal 302 (and thus also at the centroid of the conical scan points 300a-300d). Such coincidence between the direction of the beacon signal 302 and the direction of the target signal 304 is logical, as the signals are emitted from the same source (e.g., satellite 104) and the antenna receiving such signals does not exhibit beam walk over frequency. Hence the respective signals appear to be transmitted from the same location.

In its simplest case, an antenna whose beam width is circular and pointed directly at the satellite 104, the expected (ideal) centered signal strength curve for the beacon signal would essentially be a horizontal line 306, as shown in Fig. 3B, which in the present example matches the measured signal profile 308 for the beacon signal. This horizontal profile is due to the fact that the magnitude of the measured RSSI signal would remain constant throughout the entire 360° of the conical scan 300. Other frequencies in the antenna operating band would show the same result. Additionally, Figs. 3A and 3B provide one example in which the -1dB points of the antenna main beam are used for performing RSSI, however RSSI measurement points greater than or less than -1dB may also be chosen to optimize the trade-off between target signal strength and RSSI signal discrimination.

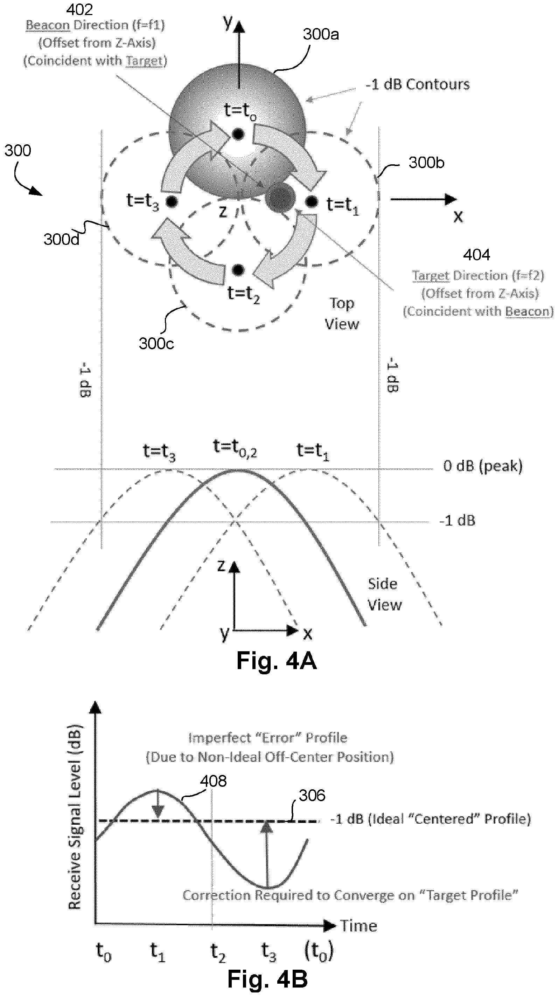

Referring briefly to Figs. 4Aand 4B, illustrated is another scenario using an antenna that does not exhibit beam walk over frequency to track a target. In Fig. 4A, a direction of a beacon signal 402 at a first frequency (f=f1) is offset from the Z-axis of the satellite 104. Similarly, a direction of a target signal 404 at a second frequency (f=f2) is also offset from the Z-axis of the satellite 104, but still coincident with the direction of the beacon signal 402. Again, the direction of the target signal 404 remains coincident with a direction of the beacon signal 402 due to the signal being transmitted from the same source (e.g., the satellite 104) and due to the antenna not exhibiting beam walk over frequency.

As can be seen in Fig. 4B, while the desired (ideal) centered signal profile 306 is flat, the measured signal profiled 408 is quasi-sinusoidal. This quasi-sinusoidal signal is due to the offset in the direction of the beacon signal 402. More specifically, in the example of Figs. 3A and 3B the direction of the beacon signal 302 is always the same distance from the center of each conical scan point 300a, 300b, 300c, 300d and thus the received signal level for each scan is substantially the same. However, in Figs. 4A and 4B, this is not the case, as the offset position in the direction of the beacon signal 402 causes each scan point 300a, 300b, 300c, 300d to detect different signal levels with respect to scan time over the course of the conical scan. As a result, the measured signal level 408 becomes quasi-sinusoidal. To properly point the antenna, the system simply adjusts the pointing direction until the measured signal level 408 becomes flat, thus corresponding with the ideal centered signal profile 306.

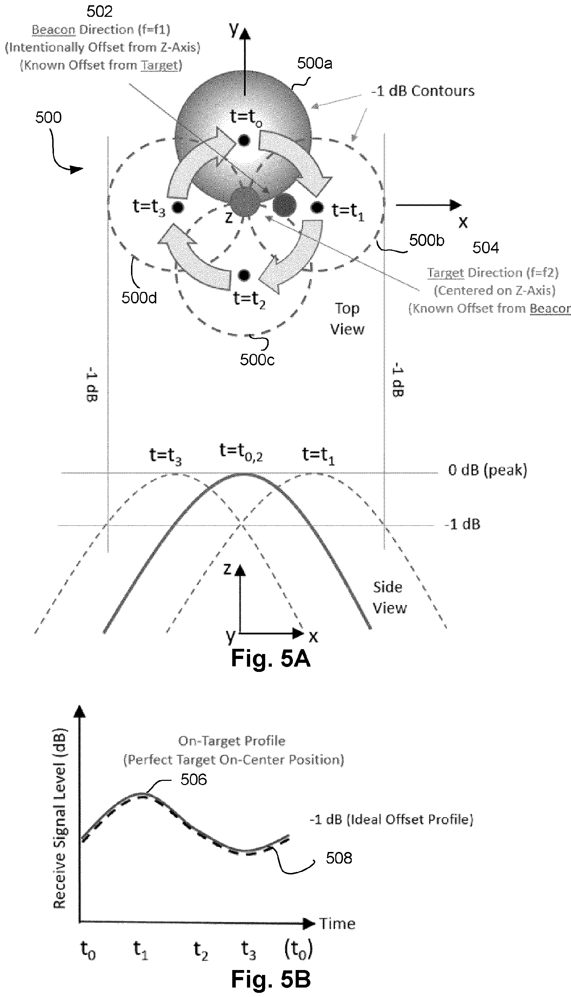

In contrast to the RSSI conical scan of conventional pointing methods that utilize antennas not exhibiting beam walk over frequency as shown in Fig. 3A and 4A, Fig. 5A illustrates a scan 500 (shown as four conical scan points 500a, 500b, 500c and 500d) using an antenna 102 that exhibits beam walk over frequency. As can be seen in example illustrated in Fig. 5A, a direction of the beacon 502 at a first frequency f=f1 is shown offset from a Z-axis of the target, while a direction of the target signal 504 at a second frequency f-f2 is centered on the Z-axis of the target (e.g., for the frequency band of interest, the antenna 102 is pointing directly at the satellite 104, even though the beacon signal indicates otherwise). Importantly, such offset in the direction of the beacon 502 relative to the direction of the target 504, which is due to beam walk over frequency, is known or can be determined through testing of the antenna's beam walk properties. Thus, while the antenna 102 is pointing at the target satellite 104 (as exhibited by the target direction 504 being centered on the Z-axis), the direction of the beacon 502 is offset due to the fact that the beacon signal is at a frequency (f1) that is different from the frequency of the target signal (f2) and, due to beam walk of the antenna, the direction of the beacon signal 502 appears offset. If conventional techniques are used to center the direction of the beacon signal 502 on the Z-axis, then the direction of the target signal 504 would move off-center and signal reception would not be optimal.

As a result of the direction of the beacon signal 502 being off-center, the measured beacon signal level 506 (strength) varies as the antenna 102 progresses through its RSSI conical scan. However, in accordance with the invention, this non-constant measured signal level 506 is employed to verify the antenna beam is properly tracking the direction of the satellite beacon 502 to ensure the antenna beam at the assigned carrier frequency of the link is still pointing directly at the satellite 104 (less the losses associated with RSSI itself). In this regard, the known characteristics of the antenna's beam walk over frequency are taken into account to generate a predetermined ideal offset profile 508 (the dashed line in Fig. 5B). Such predetermined expected signal profile 508, for example, may be determined empirically by measuring the antenna's two-dimensional (in "x" and "y" coordinates) beam walk (two-dimensional beam offset between the Beacon position 502 at f=f1 and Target Direction 504 at f=f2) over a frequency range of interest. Alternatively, conventional modeling of the deterministic beam location variation with frequency together with the two-dimensional beam shape (500a, 500b, 500c, 500d) over frequency and scan angle, using well-known simulation methods, may also be employed. By adjusting the pointing direction of the antenna 102 such that the measured beacon signal level 506 substantially matches the predetermined ideal offset profile 508, a direction of the target signal 504 will then be centered on the Z-axis of the target satellite 104.

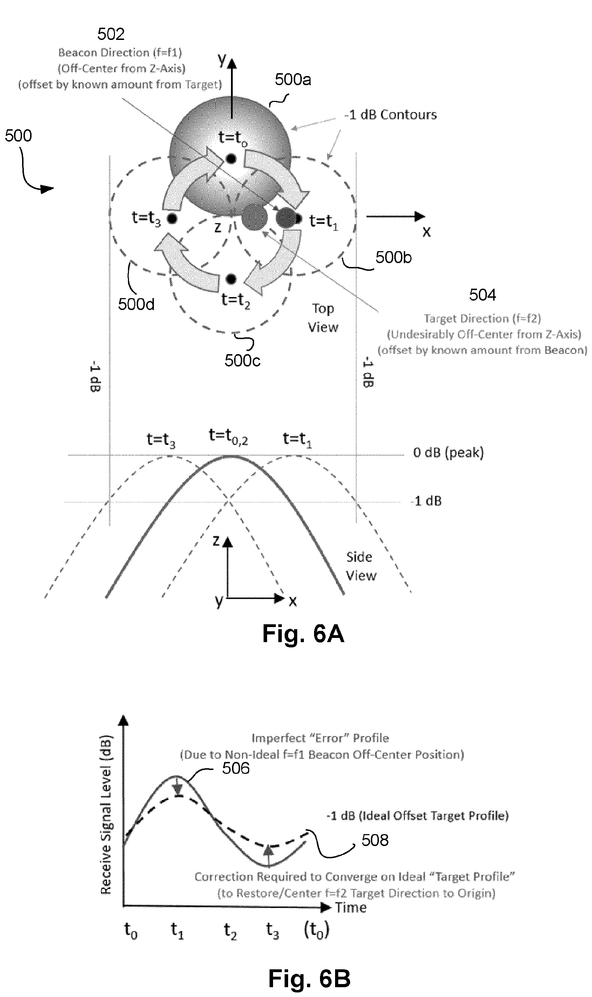

Fig. 6A illustrates another scenario in which both the direction of the beacon 502 and the direction of the target 504 are off-center from the Z-axis of the target satellite 104, where the direction of the target 504 is offset from the direction of the beacon 502 by a known amount based on the beam walk properties of the antenna 102. As a result, the measured beacon signal 506 and the pre-determined ideal offset profile 508 do not match, i.e., there is an error in the pointing direction of the antenna 102. To reduce such error, the pointing direction of the antenna 102 is adjusted such that the measured beacon signal 506 converges with the ideal offset profile 508, at which point the antenna pointing error is zero and the antenna is correctly pointing at the target satellite 104.

By adjusting the pointing direction of the antenna 102 based on a comparison of a predetermined ideal offset profile 508 (which takes into account beam walk over frequency) with the actual measured level of the beacon signal 506, an antenna 102 exhibiting beam walk over frequency can be precisely pointed at the target satellite 104, despite the beacon signal being at a frequency different from that of the target signal (and thus appearing to be in a different location than the target direction). This novel method relies on the fact that a traveling wave antenna's beam shape and amount of beam walk at each frequency in its operating band can be accurately characterized such that the measured signal level 506 can be precisely compared to an expected signal level 508 to determine if the antenna 102 has been properly pointed at the satellite 104.

It should be noted that for RSSI to be effective in each of the above examples the beam shape of each antenna 104 should be characterized across its frequency band of operation. More elaborate characterization may be utilized for phased arrays whose beam shapes typically change with frequency and scan, with such antennas typically utilizing a unique conical scan shape for each combination of frequency, elevation scan angle, and azimuth scan angle (i.e., the conical scan shape for one frequency range, specific elevation scan angle and/or azimuth scan angle may be different than a conical scan shape for another frequency range, elevation scan angle and azimuth scan angle). Also, a traveling wave antenna utilized in a similar capacity, whose beam shape and scanning phenomenology varies over frequency, would require similar characterization. However, rather than seek equal signal strength at each of the measured conical scan points, unequal values would be sought to the extent the selected beacon frequency is different from the selected communications carrier signal.

As discussed in further detail below, the method described above can be used as part of an antenna control system utilizing electronic or motorized positioning to steer the antenna beam throughout the RSSI conical scan. To the extent the measured signal strength curve does not match the expected signal strength curve angular corrections to the antenna's pointing direction are made.

In an alternative embodiment, instead of recursively matching the beacon signal level to the ideal signal profile, the slope of the curve (the "discriminant") between the measured maximum signal strength versus the measured minimum signal strength can be used to rapidly and quantitatively estimate how far off the pointing of the antenna is from its desired optimum, as measured over the duration in time (to) of the conical scan, thereby accelerating the convergence of the measured profile 506 to the ideal profile 508 . Such method can be exploited in lieu of waiting for the entire 360° of the conical scan to be measured.

Although it is theoretically possible to implement this invention without software, in practice software control of the antenna facilitates 1) maintaining a lookup table for defining the traveling wave antenna's beam shape and beam walk over frequency, and 2) performing RSSI at a reasonable loop rate to maintain accurate pointing while using the side of the antenna beam at the beacon frequency.

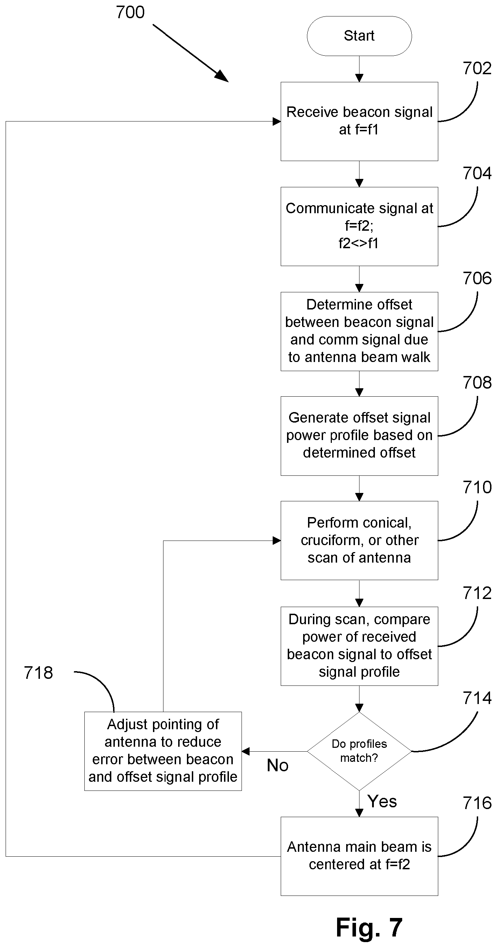

Moving now to Fig. 7, illustrated is a flow chart illustrating exemplary steps of a method 700 for tracking a signal in a satellite-on-the-move application using an antenna that exhibits beam walk over frequency.

Beginning at step 702 the antenna 102 that exhibits beam walk over frequency is used to receive, from a remote device 104, a first signal, e.g., a beacon signal, at a first frequency with a first beam direction. Next at step 704, the antenna 102 that exhibits beam walk over frequency is used to communicate with the remote device 104 a second signal at a second frequency, the second frequency offset from the first frequency and with a second beam direction, due to beam walk, offset in angle from the first beam direction. A location of the second frequency in an operating band of the antenna 102 is different from a location of the first frequency in the operating band of the antenna 102. For example, a location of the second frequency in an operating band of the antenna 102 may be opposite from a location of the first frequency in the operating band of the antenna 102.

At step 706, the offset between the first beam direction at the first frequency and the second beam direction at the second frequency is determined. Such determination may be made in advance and stored, for example, in a look-up table corresponding to the antenna 102 and retrieved upon receiving the first signal and/or second signal. For example, knowing the frequencies of the first and second signals, the offset at each frequency can be retrieved from the look-up table for the specific antenna 102 and used to determine the offset between the first signal and the second signal. Next at step 708, an ideal signal profile is generated based on the known angular offset between the directions of the first signal (at the first frequency) and the second signal (at the second frequency) due to beam walk over frequency.

Moving to step 710, a physical scan of the antenna 102 is performed over a time period for a current pointing direction of the antenna to obtain a signal level for the first signal (e.g., the beacon signal). Such scan, which may be performed periodically, may be a conical scan, a cruciform scan, or other scan methods known in the art. At step 712, during the antenna scan the signal level for the first signal is obtained and at step 714 the obtained signal level is compared to the ideal predetermined signal profile to determine if the obtained first signal level matches the predetermined ideal signal level. Such comparing can utilize predefined contours arranged about a Z-axis of the antenna main beam. For example, the contours may be a plurality of circular contours about the Z-axis of the antenna main beam, the circular contours corresponding to a -1 dB, -2dB or -3dB decrease in signal level, e.g., a radius of the contours correspond to a predetermined power drop. Alternatively, for non-circular shaped apertures or in the case of scanning phased arrays when scanned at oblique scan angles, the predefined contours may be more generally, elliptical in shape. The plurality of circular or elliptical contours may all intersect at a common point along the Z-axis as the predefined contours.

If the signals match, then the antenna main beam is centered at the second frequency as indicated at step 716 then no further adjustment is needed. However, if the signals do not match, then the method moves to step 718 and the pointing direction of the antenna 102 is adjusted to reduce error between the first (beacon or carrier) signal level and the ideal signal profile. Such adjusting is made to cause the first signal to converge to the predetermined ideal signal profile, thereby resulting in the second signal being centered on a location of the satellite 104 and a strength of the second signal being at its peak.

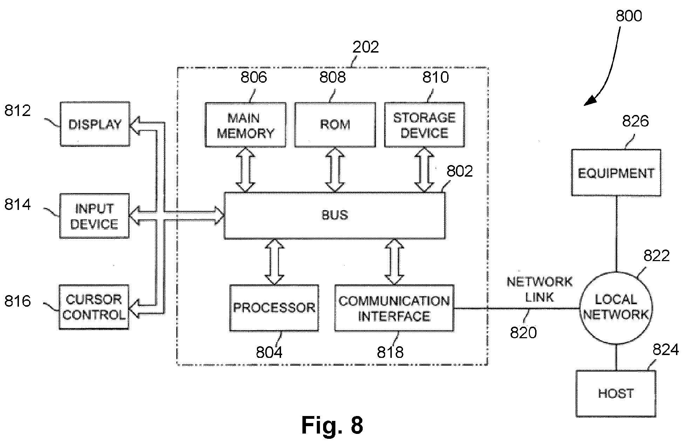

Fig. 8 is a block diagram that illustrates an embodiment of a control system 800 upon which an embodiment of the invention may be implemented. While the illustrated embodiment is shown as a processor that executes steps stored in memory, those having ordinary skill in the art will appreciate the controller may take other forms. For example, the controller may be implemented in hardware circuit(s), including discrete circuits and/or application specific integrated circuits (ASIC), or a combination of a hardware circuit and a processor executing code. Regardless of the form of the controller, it is operative to execute logical steps to carry out the method described herein.

Control system 800 includes the controller 202 discussed with respect to Fig. 2, the controller 202 having a bus 802 or other communication mechanism for communicating information, and a processor 804 coupled with the bus 802 for processing information. The controller 202 also includes a main memory 806, such as a random access memory (RAM) or other dynamic storage device, coupled to the bus 802 for storing information and instructions to be executed by the processor 804. The main memory 806 also may be used for storing temporary variables or other intermediate information during execution of instructions to be executed by the processor 804. The controller 202 further includes a read only memory (ROM) 808 or other static storage device coupled to the bus 802 for storing static information and instructions for the processor 804. A data storage device 810, such as non-volatile memory, a solid state drive, a magnetic disk or optical disk, is provided and coupled to the bus 802 for storing information and instructions.

The controller 202 may be coupled via the bus 802 to an optional display 812, such as an LED display panel, for displaying information to a user. An optional input device 814, including alphanumeric and other keys, may be coupled to the bus 802 for communicating information and command selections to processor 804. Another type of user input device is cursor control 816, such as a mouse, a trackball, or cursor direction keys for communicating direction information and command selections to processor 804 and for controlling cursor movement on display 812.

In use, processor 804 executes logic in the form of one or more sequences of one or more instructions contained in the main memory 806. Such instructions may be read into the main memory 806 from another computer-readable medium, such as storage device 810. Execution of the sequences of instructions contained in the main memory 806 causes the processor 804 to perform the process steps described herein. One or more processors in a multi-processing arrangement may also be employed to execute the sequences of instructions contained in the main memory 806. In alternative embodiments, hard-wired circuitry may be used in place of or in combination with software instructions to implement the invention. Thus, embodiments of the invention are not limited to any specific combination of hardware circuitry and software.

The term "computer-readable medium" as used herein refers to any tangible medium that participates in providing instructions to the processor 804 for execution. Such a medium may take many forms, including but not limited to, non-volatile media and volatile media. Non-volatile media includes, for example, solid state drives (SSD), optical or magnetic disks, such as the storage device 810. Volatile media includes dynamic memory, such as the main memory 806. Common forms of computer-readable media include, for example, a floppy disk, a flexible disk, hard disk, magnetic tape, or any other magnetic medium, a CD-ROM, any other optical medium, punch cards, paper tape, any other physical medium with patterns of holes, a RAM, a PROM, and EPROM, a FLASH-EPROM, any other memory chip or cartridge, a carrier wave as described hereinafter, or any other medium from which a computer can read.

The controller 202 may optionally include a communication interface 818 coupled to the bus 802. The communication interface 818 provides a two-way data communication coupling to an optional network link 820 that is connected to a local network 822. As an example, the communication interface 18 may be a local area network (LAN) card to provide a data communication connection to a compatible LAN. Wireless links may also be implemented. In any such implementation, the communication interface 818 sends and receives electrical, electromagnetic or optical signals that carry data streams representing various types of information.

The network link 820 typically provides data communication through one or more networks to other devices. For example, the network link 820 may provide a connection through local network 822 to a host computer 824 or to communication management equipment 826. The data streams transported over the network link 820 can comprise electrical, electromagnetic or optical signals. The signals through the various networks and the signals on the network link 820 and through the communication interface 818, which carry data to and from the controller 202, are exemplary forms of carrier waves transporting the information. The controller 202 can send messages and receive data, including program code, through the network(s), the network link 820, and the communication interface 818.

Although the invention has been shown and described with respect to a certain embodiment or embodiments, equivalent alterations and modifications may occur to others skilled in the art upon the reading and understanding of this specification and the annexed drawings. In particular regard to the various functions performed by the above described elements (components, assemblies, devices, compositions, etc.), the terms (including a reference to a "means") used to describe such elements are intended to correspond, unless otherwise indicated, to any element which performs the specified function of the described element (i.e., that is functionally equivalent), even though not structurally equivalent to the disclosed structure which performs the function in the herein exemplary embodiment or embodiments of the invention. In addition, while a particular feature of the invention may have been described above with respect to only one or more of several embodiments, such feature may be combined with one or more other features of the other embodiments, as may be desired and advantageous for any given or particular application.

Moreover, the following embodiments are disclosed:
1. A method for tracking a signal in a satellite-on-the-move application using an antenna that exhibits beam walk over frequency, the method comprising:
   using the antenna that exhibits beam walk over frequency to receive, from a remote device, a first signal at a first frequency with a first beam direction;
   using the antenna that exhibits beam walk over frequency to communicate with the remote device a second signal at a second frequency, the second frequency offset from the first frequency and with a second beam direction offset in angle from the first beam direction;
   performing over a prescribed time period a periodic physical scan of the antenna about a current pointing direction of the antenna;
   comparing a strength of the received first signal over the prescribed time period to a predetermined signal profile; and
   adjusting a pointing direction of the antenna based on the comparison, whereby said adjusting causes the first signal to converge to the predetermined signal profile resulting in a strength of the second signal to peak.
2. The method according to embodiment 1, wherein comparing further includes generating the predetermined signal profile based on a known angular offset between the first beam direction at the first frequency and the second beam direction at the second frequency due to beam walk over frequency.
3. The method according to any one of embodiments 1-2, wherein adjusting the pointing direction of the antenna based on the comparison comprises adjusting the pointing direction to center the second signal on a location of the remote device.
4. The method according to any one of embodiments 1-3, wherein comparing the strength of the received first signal to the predetermined signal profile comprises using predefined contours arranged about a Z-axis of the antenna main beam.
5. The method according to embodiment 4, wherein using predefined contours includes using a plurality of circular or elliptical contours that all intersect at a common point along the Z-axis as the predefined contours.
6. The method according to embodiment 5, wherein a radius of each of the plurality of circular or elliptical contours corresponds to a predetermined power drop of the second signal.
7. The method according to embodiment 6, wherein the predetermined power drop is less than 3dB.
8. A method for tracking a signal in a satellite-on-the-move application using an antenna that exhibits beam walk over frequency, the method comprising:
   using the antenna that exhibits beam walk over frequency to receive, from a remote device, a first signal at a first frequency with a first beam direction;
   using the antenna that exhibits beam walk over frequency to communicate with the remote device a second signal at a second frequency, the second frequency offset from the first frequency and with a second beam direction offset in angle from the first beam direction; and
   using a side of a main beam of the antenna to track the first signal so as to center the communication signal on a peak of the antenna's main beam.
9. The method according to any one of embodiments 1-8, wherein performing the periodic physical scan of the antenna includes performing at least one of a conical scan or a cruciform scan.
10. The method according to any one of embodiments 1-9, wherein a location of the second frequency in an operating band of the antenna is different from a location of the first frequency in the operating band of the antenna.
11. The method according to any one of embodiments 1-10, wherein a location of the second frequency in an operating band of the antenna is opposite from a location of the first frequency in the operating band of the antenna.
12. The method according to any one of embodiments 1-11, further comprising using a variable inclination continuous transverse stub (VICTS) antenna as the antenna that exhibits beam walk over frequency.
13. A controller for tracking a signal in a satellite-on-the-move application using an antenna that exhibits beam walk over frequency, the controller comprising:
   logic configured to obtain, via the antenna that exhibits beam walk over frequency, a first signal from a remote device, the first signal at a first frequency and having a first beam direction;
   logic configured to communicate with the remote device via the antenna that exhibits beam walk over frequency a second signal at a second frequency, the second frequency offset from the first frequency and having a second beam direction offset in angle from the first beam direction;
   logic configured to perform over a prescribed time period a periodic physical scan of the antenna about a current pointing direction of the antenna;
   logic configured to compare a strength of the received first signal over the prescribed time period to a predetermined signal profile; and
   logic configured to adjust a pointing direction of the antenna based on the comparison, whereby said adjusting causes the first signal to converge to the predetermined signal profile resulting in a strength of the second signal to peak.
14. The controller according to embodiment 13, wherein the logic configured to perform the periodic physical scan of the antenna comprises logic configured to implement the physical scan in the form of at least one of a conical scan or a cruciform scan.
15. The controller according to any one of embodiments 13-14, wherein the logic configured to compare the strength of the received first signal over the prescribed time period to the predetermined signal profile comprises logic configured to generate the predetermined signal profile based on a known angular offset between the first abeam direction at the first frequency and the second beam direction at the second frequency due to beam walk over frequency.
16. The controller according to any one of embodiments 13-15, wherein the logic configured to adjust the pointing direction of the antenna based on the comparison comprises logic configured to adjust the pointing direction to center the second signal on a location of the remote device.
17. The controller according to any one of embodiments 13-16, wherein a location of the second frequency in an operating band of the antenna is different from a location of the first frequency in the operating band of the antenna.
18. The controller according to any one of embodiments 13-17, wherein a location of the second frequency in an operating band of the antenna is opposite from a location of the first frequency in the operating band of the antenna.
19. The controller according to any one of embodiments 13-18, wherein the logic configured to compare the strength of the received first signal over the prescribed time period to the predetermined signal profile comprises logic configured to use predefined contours arranged about a Z-axis of the antenna main beam.
20. The controller according to embodiment 19, wherein the logic configured to use predefined contours arranged about the Z-axis of the antenna main beam includes logic configured to use a plurality of circular or elliptical contours that all intersect at a common point along the Z-axis as the predefined contours.
21. The controller according to embodiment 20, wherein a radius of each of the plurality of circular or elliptical contours corresponds to a predetermined power drop of the second signal.
22. The controller according to embodiment 21, wherein the predetermined power drop is less than 3dB.
23. An antenna system for use in satellite-on-the-move applications, comprising:
   a variable inclination continuous transverse stub (VICTS) antenna; and
   the controller according to any one of embodiments 13-22 operatively coupled to the VICTS antenna.

## Claims

1. A method for tracking a signal in a satellite-on-the-move application using an antenna that exhibits beam walk over frequency, the method comprising:
using the antenna that exhibits beam walk over frequency to receive, from a remote device, a first signal at a first frequency with a first beam direction;
using the antenna that exhibits beam walk over frequency to communicate with the remote device a second signal at a second frequency, the second frequency offset from the first frequency and with a second beam direction offset in angle from the first beam direction;
performing over a prescribed time period a periodic physical scan of the antenna about a current pointing direction of the antenna;
comparing a strength of the received first signal over the prescribed time period to a predetermined signal profile; and
adjusting a pointing direction of the antenna based on the comparison, whereby said adjusting causes the first signal to converge to the predetermined signal profile resulting in a strength of the second signal to peak.

2. The method according to claim 1, wherein comparing further includes generating the predetermined signal profile based on a known angular offset between the first beam direction at the first frequency and the second beam direction at the second frequency due to beam walk over frequency.

3. The method according to any one of claims 1-2, wherein adjusting the pointing direction of the antenna based on the comparison comprises adjusting the pointing direction to center the second signal on a location of the remote device.

4. The method according to any one of claims 1-3, wherein comparing the strength of the received first signal to the predetermined signal profile comprises using predefined contours arranged about a Z-axis of the antenna main beam.

5. The method according to any one of claims 1-4, wherein a location of the second frequency in an operating band of the antenna is different from a location of the first frequency in the operating band of the antenna.

6. The method according to any one of claims 1-5, wherein a location of the second frequency in an operating band of the antenna is opposite from a location of the first frequency in the operating band of the antenna.

7. The method according to any one of claims 1-6, further comprising using a variable inclination continuous transverse stub (VICTS) antenna as the antenna that exhibits beam walk over frequency.

8. A controller for tracking a signal in a satellite-on-the-move application using an antenna that exhibits beam walk over frequency, the controller comprising:
logic configured to obtain, via the antenna that exhibits beam walk over frequency, a first signal from a remote device, the first signal at a first frequency and having a first beam direction;
logic configured to communicate with the remote device via the antenna that exhibits beam walk over frequency a second signal at a second frequency, the second frequency offset from the first frequency and having a second beam direction offset in angle from the first beam direction;
logic configured to perform over a prescribed time period a periodic physical scan of the antenna about a current pointing direction of the antenna;
logic configured to compare a strength of the received first signal over the prescribed time period to a predetermined signal profile; and
logic configured to adjust a pointing direction of the antenna based on the comparison, whereby said adjusting causes the first signal to converge to the predetermined signal profile resulting in a strength of the second signal to peak.

9. The controller according to claim 8, wherein the logic configured to perform the periodic physical scan of the antenna comprises logic configured to implement the physical scan in the form of at least one of a conical scan or a cruciform scan.

10. The controller according to any one of claims 8-9, wherein the logic configured to compare the strength of the received first signal over the prescribed time period to the predetermined signal profile comprises logic configured to generate the predetermined signal profile based on a known angular offset between the first abeam direction at the first frequency and the second beam direction at the second frequency due to beam walk over frequency.

11. The controller according to any one of claims 8-10, wherein the logic configured to adjust the pointing direction of the antenna based on the comparison comprises logic configured to adjust the pointing direction to center the second signal on a location of the remote device.

12. The controller according to any one of claims 8-11, wherein a location of the second frequency in an operating band of the antenna is different from a location of the first frequency in the operating band of the antenna.

13. The controller according to any one of claims 8-12, wherein a location of the second frequency in an operating band of the antenna is opposite from a location of the first frequency in the operating band of the antenna.

14. The controller according to any one of claims 8-13, wherein the logic configured to compare the strength of the received first signal over the prescribed time period to the predetermined signal profile comprises logic configured to use predefined contours arranged about a Z-axis of the antenna main beam.

15. An antenna system for use in satellite-on-the-move applications, comprising:
a variable inclination continuous transverse stub (VICTS) antenna; and
the controller according to any one of claims 8-14 operatively coupled to the VICTS antenna.
